# FASCICULE DE BREVET EUROPEEN

(11) **EP 2 715 299 B1**
(45) Date de publication et mention de la délivrance du brevet: **04.05.2016**
(21) Numéro de dépôt: 12728691.2
(22) Date de dépôt: 15.05.2012
(51) Int. Cl.: G01L 1/14, G08C 17/04

(54) **CAPTEUR DE CONTRAINTE**
DEHNUNGSSENSOR
STRAIN SENSOR

(30) Priorité: 31.05.2011 FR 1154781
(43) Date de publication de la demande: 09.04.2014
(73) Titulaire: Centre National de la Recherche Scientifique (CNRS), 75794 Paris Cedex 16 (FR)
(72) Inventeur: AUBERT, Hervé, F-31000 Toulouse (FR); THAI, Trang Thuy, Atlanta, Georgia GA 30332 (US); PONS, Patrick, F-31750 Escalquens (FR)
(74) Mandataire: Cabinet Plasseraud
(86) Numéro de dépôt international: PCT/FR2012/051082
(87) Numéro de publication internationale: WO 2012/164191

(56) Documents cités:
- US-A1- 2006 032 314
- US-A1- 2007 186 677
- US-A1- 2009 165 572

## Description

La présente invention est relative aux capteurs de contrainte, en particulier ceux ayant une réponse spectrale sélective vis-à-vis de signaux électromagnétiques incidents, et qui peuvent être sollicités à distance sans contact.

Il est connu de différentes publications, par exemple les documents US 2007/0186677 et US 2006/0032314, des capteurs de contrainte ayant une réponse spectrale sélective vis-à-vis de signaux électromagnétiques incidents. Ces dispositifs comprennent un substrat support, une première portion conductrice, une deuxième portion conductrice comportant une boucle ouverte couplée à ladite première portion conductrice, ladite boucle ouverte comprenant une première extrémité et une seconde extrémité agencée en vis-à-vis de la première extrémité. La première extrémité et la seconde extrémité définissent ensemble un condensateur ayant une capacité électrique d'une valeur dépendant de la position de la première extrémité par rapport à la seconde extrémité. Lorsqu'une force prédéterminée ou contrainte prédéterminée est appliquée au substrat selon une direction longitudinale, il se produit un étirement du substrat selon la direction longitudinale et il en résulte une modification de la position de la première extrémité par rapport à la seconde extrémité qui modifie la capacité électrique et qui modifie la réponse spectrale.

Cependant, il est apparu que la sensibilité de tels capteurs de contrainte était insuffisante pour détecter une large gamme d'efforts et en particulier pour détecter facilement des efforts et/ou des étirements relativement modérés.

Il est donc apparu un besoin d'augmenter la sensibilité de tels équipements.

A cet effet, l'invention a pour objet un capteur de contrainte de type précité, caractérisé en ce que la boucle ouverte comprend au moins une portion en porte-à-faux, s'étendant selon la direction longitudinale, qui présente une extrémité d'ancrage liée au substrat, une partie centrale non liée au substrat et une extrémité libre formant la seconde extrémité.

Grâce à ces dispositions, les déplacements de la portion en porte-à-faux et en particulier de la seconde extrémité sont amplifiés et il est possible de détecter aisément une contrainte appliquée au substrat.

Dans divers modes de réalisation de l'invention, on peut éventuellement avoir recours en outre à l'une ou plusieurs des dispositions suivantes, prises isolément ou en combinaison :
- la première portion présente une première fréquence de résonance, et la deuxième portion présente une deuxième fréquence de résonance, proche de la première fréquence de résonance ; de sorte que la modification de la capacité permet à la réponse spectrale de basculer d'une fréquence à l'autre pour de faibles écarts de valeur de capacité;
- le capteur de contrainte peut comprendre en outre un plan de masse situé sur la face du substrat opposée à la face supportant les première et deuxième portions ; moyennant quoi on obtient un bon découplage électromagnétique vis-à-vis de la matière du support sur lequel le capteur de contrainte est placé ;
- le capteur de contrainte est dépourvu de source d'alimentation électrique locale ('battery-less') ; moyennant quoi aucune maintenance n'est nécessaire et la fiabilité est améliorée ;
- le capteur de contrainte est dépourvu de composant électronique discret ; moyennant quoi sa fiabilité est améliorée ;
- le substrat s'étend essentiellement selon un plan XY et la portion en porte-à-faux peut être décalée dans une direction perpendiculaire audit plan XY par rapport à la première extrémité ; moyennant quoi le condensateur est réalisé par un recouvrement partiel de la première extrémité vis-à-vis de la deuxième extrémité ;
- au moins l'une des extrémités présente une forme en pointe ; de sorte que le gain est amélioré et que la sensibilité est augmentée ;
- la longueur de la portion en porte-à-faux peut être supérieure à environ quatre fois la longueur de recouvrement en l'absence d'effort ; de cette façon, on obtient une modification plus importante de la valeur de la capacité et donc une sensibilité améliorée;
- la matière du substrat peut comprendre du kapton ; ainsi l'étirement du substrat ne crée pas d'effort résistant trop important ;
- la gamme des fréquences utilisées est comprise entre environ 1 GHz et environ 80 GHz, moyennant quoi on peut réaliser un capteur de contrainte de petite taille ;
- le capteur peut comprendre en outre une troisième portion conductrice comportant une deuxième boucle ouverte couplée à ladite première portion conductrice, ladite deuxième boucle ouverte comprenant des extrémités formant un condensateur, les dites extrémités étant adaptées pour être déplacées l'une par rapport à l'autre sous l'effet d'une force appliquée au substrat selon une direction transversale ; moyennant quoi il est possible de détecter la direction de la contrainte appliquée au substrat.

L'invention vise aussi un système de détection d'effort comprenant un émetteur-récepteur et un capteur de contrainte tel que décrit ci-dessus, interagissant au travers de signaux électromagnétiques, dans lequel ledit émetteur-récepteur est agencé pour analyser une réponse spectrale sélective du capteur de contrainte aux signaux électromagnétiques incidents émis par ledit émetteur-récepteur.

D'autres aspects, buts et avantages de l'invention apparaîtront à la lecture de la description suivante de plusieurs modes de réalisation de l'invention, donnés à titre d'exemples non limitatifs, en regard des dessins joints sur lesquels :
- la figure 1 est une vue générale d'un système de détection d'effort comprenant un émetteur-récepteur et un capteur de contrainte selon un premier mode de réalisation,
- la figure 2 est une vue en perspective du capteur de contrainte de la Figure 1,
- la figure 3 est une vue en coupe du capteur de contrainte de la Figure 1,
- la figure 4 est une vue de dessus du capteur de contrainte de la Figure 1,
- la figure 5 est une vue en perspective du capteur de contrainte selon un deuxième mode de réalisation,
- la figure 6 est une vue en coupe du capteur de contrainte de la Figure 5,
- la figure 7 est une vue en perspective du capteur de contrainte selon un troisième mode de réalisation, et
- la figure 8 est un graphe montrant un exemple de courbes de réponse spectrale résultant d'efforts exercé sur capteur de contrainte selon des modes de réalisation l'invention,
- la figure 9 est une vue d'un capteur de contrainte selon un quatrième mode de réalisation.

Sur les différentes figures, les mêmes références désignent des éléments identiques ou similaires.

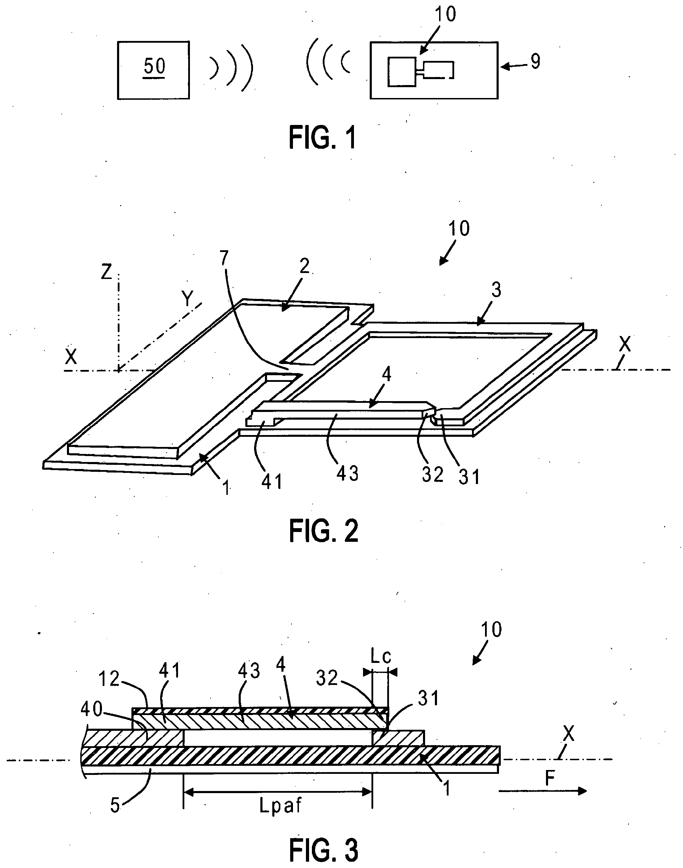

La figure 1 montre un système de détection d'effort comprenant un émetteur-récepteur 50 et un capteur de contrainte 10. L'émetteur-récepteur 50 est agencé pour émettre des ondes électromagnétiques en direction du capteur de contrainte 10, lequel présente une réponse spectrale sélective vis-à-vis de ces signaux électromagnétiques incidents. Le capteur de contrainte 10 est fixé sur un objet 9 pour lequel on souhaite savoir par exemple s'il est soumis à un effort mécanique, l'objet en question 9 pouvant se situer dans un endroit difficile d'accès ou dans une zone inhospitalière ou dangereuse.

L'émetteur-récepteur 50 est agencé pour recevoir et analyser cette réponse spectrale en mesurant pour chaque fréquence pertinente la puissance réfléchie ou emmagasinée par le capteur de contrainte 10.

Dans l'exemple illustré, l'émetteur-récepteur 50 travaille à distance et donc sans contact par rapport au capteur de contrainte 10, mais il n'est toutefois pas exclu d'avoir l'émetteur-récepteur 50 en contact direct avec le capteur de contrainte 10.

La figure 2 montre en perspective un exemple de capteur de contrainte 10, qui comprend :
- un substrat support 1,
- un première portion conductrice 2,
- une deuxième portion conductrice comportant boucle ouverte 3 couplée à ladite première portion.

Le substrat support 1 peut être réalisé, comme dans l'exemple illustré, à partir d'un matériau diélectrique, à base de matériau polyimide tel que le kapton. Le substrat support 1 se présente comme une plaque d'épaisseur sensiblement constante s'étendant parallèlement à un plan XY. L'épaisseur du substrat en kapton 1 est typiquement comprise entre 50um et 150um.

Sur la face supérieure du substrat 1, est disposé un matériau conducteur de type cuivre formant les première et deuxième portions conductrices 2,3, d'épaisseur typiquement comprise entre 30um et 100um.

La première portion conductrice 2 se présente sous la forme d'une piste rectangle pleine (aussi parfois appelée 'patch') de dimensions comprises par exemple entre 10 mm et 50mm. Dans un exemple particulier expérimenté, la largeur du rectangle est voisine de 25 mm et la longueur est voisine de 26 mm. Le comportement radio électrique de cette portion sera détaillé plus loin.

La deuxième portion conductrice est couplée à la première portion 2 par un élément de couplage 7 et comprend une boucle ouverte, laquelle comprend une première extrémité 31 et une seconde extrémité 32 agencée à proximité et en vis-à-vis de la première extrémité 31.

La première extrémité 31 et la seconde extrémité 32 forment ensemble un condensateur ayant une capacité électrique d'une valeur dépendant de la position de la première extrémité 31 par rapport à la seconde extrémité 32.

Plus particulièrement, et en référence aux figures 2, 3 et 4, la deuxième portion conductrice 3 comprend au moins une portion en porte-à-faux 4, s'étendant selon la direction longitudinale X, et décalée selon l'axe Z perpendiculairement au plan XY, vers le haut dans l'exemple illustré, le décalage correspondant sensiblement à l'épaisseur de la portion de base 40 issu de la piste principale.

On entend par portion 'en porte-à-faux' une portion ou plus généralement un élément qui est fixé à l'une de ses extrémités et qui est ni fixé et ni supporté à l'autre de ses extrémités.

La portion en porte-à-faux 4 présente une extrémité d'ancrage 41 fixée à la portion de base 40 et donc liée au substrat, une partie centrale 43 non liée au substrat et une extrémité libre 32 formant la seconde extrémité 32.

La boucle formée peut avoir comme dimensions, comme dans l'exemple expérimenté, une longueur de 13 mm et une largeur de 5 mm, la portion en porte-à-faux 4 ayant une section de largeur de 1 mm.

La seconde extrémité 32 est agencée au dessus de la première extrémité 31, définissant ainsi une zone de recouvrement de longueur 'Lc' selon la direction longitudinale X.

La partie centrale 43 de la portion en porte-à-faux 4 présente une dimension longitudinale 'Lpaf' supérieure, par exemple quatre fois supérieure, à la dimension de recouvrement Lc.

La partie en porte-à-faux 4 peut être réalisée en utilisant une structure identique à celle décrite plus haut, mais retournée par rapport au plan XY, et dans ce cas une couche de substrat kapton 12 se retrouve au dessus de partie en porte-à-faux 4.

Il peut être prévu une couche de matériau isolant entre les première et deuxième extrémités 31,32 pour éviter qu'elles ne soient en contact électrique direct.

Selon un principe connu dans les jauges de contraintes, lorsqu'une force prédéterminée F est appliquée au substrat selon une direction longitudinale X, il se produit un étirement du substrat selon la direction longitudinale X et il en résulte une modification de la position de la première extrémité 31 par rapport à la seconde extrémité 32 qui modifie de la capacité électrique et qui modifie à son tour la réponse spectrale du dispositif. Il s'agit ici d'un capteur de type transducteur, qui transforme un étirement en modification d'une caractéristique électrique, en l'occurrence la valeur de la capacité.

Selon une disposition avantageuse, il peut en outre être prévu un plan de masse 5 sur la face inférieure du substrat 1. Ce plan de masse est par exemple une piste conductrice qui couvre toute la surface en vis-à-vis des première et deuxième portions 2,3. On obtient ainsi un bon découplage électromagnétique vis-à-vis de la matière du support sur lequel le capteur de contrainte est placé. En particulier, les performances radio-électriques ne sont alors pas influencées par la nature du matériau de l'objet 9. sur lequel on a placé le capteur de contrainte 10, que cela soit du métal, du plastique, un matériau organique ou tout matériau approprié.

Concernant le comportement électromagnétique ou radio électrique, on notera que la première portion 2 présente au moins une première fréquence de résonance F1, et la deuxième portion présente une deuxième fréquence de résonance F2, proche de la première fréquence de résonance F1.

La réponse spectrale du capteur de contrainte 10 est sélective, en particulier dans la zone de ces deux fréquences F1, F2, car la modification de la valeur de la capacité permet à la réponse spectrale de basculer d'une fréquence à l'autre pour de faibles écarts de valeur.de capacité.

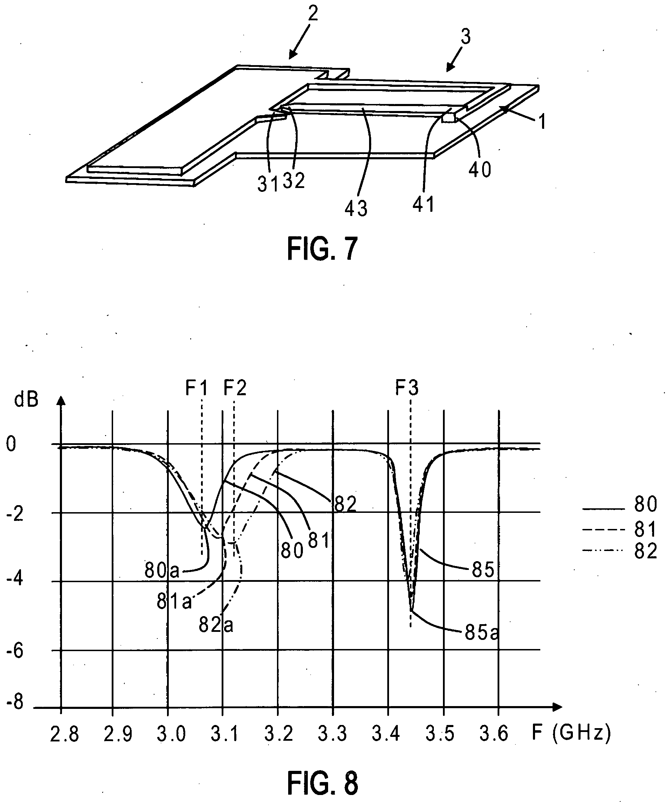

Par ailleurs, les premières et deuxièmes portions 2,3 peuvent présenter d'autres fréquences de résonance, qui seront moins dépendantes voire indépendantes de la valeur de la capacité, comme par exemple une fréquence de référence F3 dans l'exemple illustré par la figure 8.

Par ailleurs, le capteur de contrainte 10 est de préférence dépourvu de source d'alimentation électrique locale (on dit aussi 'battery-less'), de sorte qu'aucune maintenance n'est nécessaire, par exemple pour remplacer une batterie électrique, et la fiabilité du système est améliorée ainsi que la tolérance à des conditions environnementales très sévères.

Par ailleurs, le capteur de contrainte 10 est de préférence dépourvu de composant électronique discret (on dit aussi 'chip-less'), de sorte que la fiabilité du système est améliorée ainsi que la tolérance à des conditions environnementales très sévères.

Si un étirement de K% se produit suite à l'application d'une force F, où K est un nombre quelconque, la distance Lc varie de K% x Lpaf, ce qui est supérieur à la variation de K% de Lc qui se produirait si la poutre 4 était liée au substrat 1. La partie en porte-à-faux 4 permet donc d'amplifier le mouvement de la deuxième extrémité.

En référence à la figure 8, en l'absence d'effort exercé sur l'objet 9, la réponse spectrale est celle représentée en traits pleins et repérée par la référence 80.

Sous un effort modéré, la réponse spectrale est celle représentée en traits pointillés et repérée par la référence 81. Le pic s'est déplacé vers la droite à mi-chemin entre F1 et F2.

Sous un effort plus important, la réponse spectrale est celle représentée en traits mixtes et repérée par la référence 82. Le pic s'est encore plus déplacé vers la droite pour être au voisinage de la fréquence F2.

En revanche, la réponse à la fréquence F3 (repérée par la référence 85) n'évolue pratiquement pas et la position de son extremum ne se déplace pas. Ainsi, l'émetteur-récepteur 50 peut analyser l'écart entre le premier pic 80a,81a,82a de la réponse spectrale et le deuxième pic de la réponse spectrale 85a.

La troisième fréquence F3 sert ainsi d'étalonnage, qui peut être sensiblement différente d'un exemplaire du capteur de contrainte 10 à l'autre, en fonction de la dispersion de la fabrication. La mesure différentielle de l'écart entre un pic de fréquence de référence (F3 ici) et un pic de fréquence dont la position dépend grandement de l'effort appliqué permet d'éliminer à la fois les dispersions de fabrication, les offsets et les dérives lentes auxquels peut être sujet le capteur de contrainte.

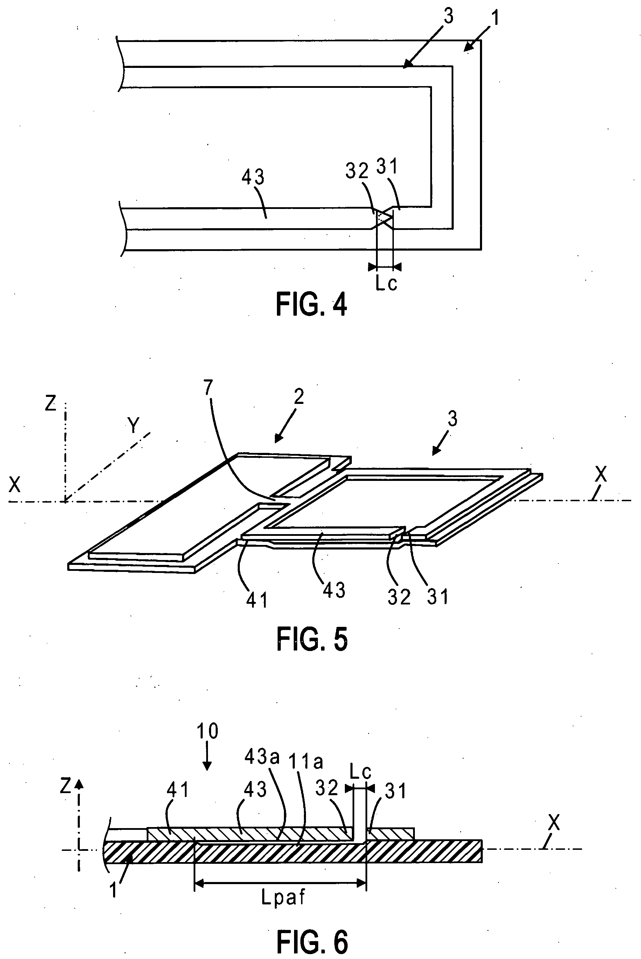

Selon un deuxième mode de réalisation, illustré aux figures 5 et 6, la deuxième portion conductrice 3 se présente comme une piste agencée dans un plan unique. Dans ce mode, c'est le substrat 1 qui présente une zone en creux 11a de sorte que la surface inférieure 43a de la partie centrale 43 de la portion en porte-à-faux 4 est à distance de la surface 11a, et par conséquent la partie centrale 43 de la portion en porte-à-faux 4 est libre de se déplacer par rapport au substrat 1. La première extrémité 31 et la deuxième extrémité 32 se trouvent bout à bout dans cette configuration, l'effet d'amplification procuré par la partie en porte-à-faux 4 est présent néanmoins.

Selon un troisième mode de réalisation, illustré sur la figure 7, l'élément de couplage 7 et les extrémités 31,32 sont réalisées par une même structure. La première extrémité 31 est adjacente à la première portion conductrice 2. La portion de base 40 et l'extrémité d'ancrage se trouvent à l'extrémité opposée de la boucle 3 par exemple sur l'axe longitudinal X. Le fonctionnement est tout-à-fait similaire à celui décrit pour le premier mode.

Il est à noter que, pour tous les modes de réalisation, l'invention peut être utilisée dans le domaine élastique, auquel cas la structure revient à chaque fois à une position de repos initiale lorsque l'effort cesse d'être appliqué ; mais l'invention peut être utilisée aussi en dehors du domaine élastique, par exemple pour la détection de micro-fissures résultant de la fatigue, auquel une déformation permanente se produit, en raison d'une excursion dans le domaine plastique ou en raison de la formation de micro-fissures résultant de contraintes alternées.

Il est aussi à noter que l'élément de couplage 7 pourrait se présenter sous une forme différente par exemple un couplage capacitif.

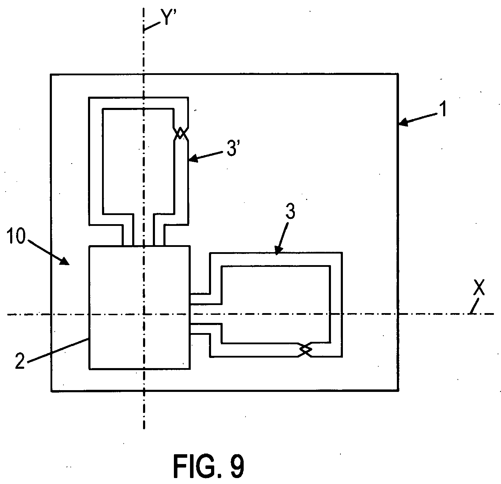

Selon un quatrième mode de réalisation, illustré à la figure 9, le capteur comprend en outre une troisième portion conductrice comportant une deuxième boucle ouverte 3' couplée à la première portion conductrice 2.

Cette troisième portion conductrice est agencée selon un axe dit transversal Y', qui peut être par exemple perpendiculaire à X ou présenter un angle aigu ou obtus par rapport à X. Cette troisième portion conductrice est arrangée pour détecter une contrainte selon la direction transversale Y'.

Cette troisième portion est agencée d'une manière similaire à la deuxième portion, à la différence de l'orientation générale modifiée. Cependant, il est opportun d'adapter le circuit électrique de cette troisième portion conductrice de manière à ce qu'elle présente une troisième fréquence de résonance F4, qui est distincte de la deuxième fréquence F2 ; ainsi l'analyse de la réponse spectrale sera facilitée. Pour arriver à cet effet, on pourra utiliser une forme de patch rectangulaire, à savoir une dimension du patch selon X différente de sa dimension selon Y'.

Les extrémités du condensateur formés dans la troisième portion conductrice 3' sont adaptées pour être déplacées l'une par rapport à l'autre sous l'effet d'une force appliquée au substrat selon la direction transversale Y', classiquement, ou de préférence en utilisant une portion en porte-à-faux comme cela a été décrit plus haut.

L'émetteur-récepteur 50 peut alors analyser la réponse spectrale du capteur de contrainte 10 pour en extraire la contrainte selon la direction longitudinale X et la contrainte selon la direction transversale Y', et en déduire sensiblement la direction de la contrainte appliquée au substrat donc à l'objet 9 sous surveillance.

## Revendications

1. Capteur de contrainte (10) ayant une réponse spectrale sélective vis-à-vis de signaux électromagnétiques incidents, comprenant :
- un substrat support (1),
- une première portion conductrice (2),
- une deuxième portion conductrice comportant une boucle ouverte (3) couplée à ladite première, portion conductrice,
ladite boucle ouverte comprenant une première extrémité (31) et une seconde extrémité (32) agencée en vis-à-vis de la première extrémité (31),
dans lequel la première extrémité (31) et seconde extrémité (32) définissent ensemble un condensateur ayant une capacité électrique d'une valeur dépendant de la position de la première extrémité (31) par rapport à la seconde extrémité (32),
dans lequel, lorsque une force prédéterminée est appliquée au substrat selon une direction longitudinale (X), il se produit un étirement du substrat selon la direction longitudinale (X) et il en résulte une modification de la position de la première extrémité (31) par rapport à la seconde extrémité (32) qui modifie la capacité électrique et qui modifie la réponse spectrale,
**caractérisé en ce que** la boucle ouverte comprend au moins une portion en porte-à-faux (4), s'étendant selon la direction longitudinale (X), qui présente une extrémité d'ancrage (41) liée au substrat, une partie centrale (43) non liée au substrat et une extrémité libre (32) formant la seconde extrémité (32).

2. Capteur selon la revendication 1, dans lequel la première portion (2) présente une première fréquence de résonance (F1), et dans lequel la deuxième portion présente une deuxième fréquence de résonance (F2), proche de la première fréquence de résonance (F1).

3. Capteur selon l'une des revendications 1 à 2, comprenant en outre un plan de masse (5) situé sur la face du substrat opposée à la face supportant les première et deuxième portions (2,3).

4. Capteur selon l'une des revendications 1 à 3, **caractérisé en ce qu'**il est dépourvu de source d'alimentation électrique locale.

5. Capteur selon l'une des revendications 1 à 4, **caractérisé en ce qu'**il est dépourvu de composant électronique discret.

6. Capteur selon l'une des revendications 1 à 5, dans lequel le substrat s'étend essentiellement selon un plan XY et dans lequel la portion en porte-à-faux (4) est décalée dans une direction perpendiculaire audit plan XY par rapport à la première extrémité (31).

7. Capteur selon l'une des revendications 1 à 6, dans lequel au moins l'une des extrémités (31,32) présente une forme en pointe.

8. Capteur selon l'une des revendications 1 à 7, dans lequel la longueur (Lpaf) de la portion en porte-à-faux (4) est supérieure à environ quatre fois la longueur de recouvrement (Lc) en l'absence d'effort.

9. Capteur selon l'une des revendications 1 à 8, dans lequel la matière du substrat (1) comprend du kapton.

10. Capteur selon l'une des revendications 1 à 9, dans lequel la gamme des fréquences utilisées est comprise entre environ 1 GHz et environ 80 GHz.

11. Capteur selon l'une des revendications 1 à 10, comprenant en outre une troisième portion conductrice comportant une deuxième boucle ouverte (3') couplée à ladite première portion conductrice, ladite deuxième boucle ouverte comprenant des extrémités formant un condensateur, les dites extrémités étant adaptées pour être déplacées l'une par rapport à l'autre sous l'effet d'une force appliquée au substrat selon une direction transversale (Y).

12. Système de détection d'effort comprenant un émetteur-récepteur (50) et un capteur de contrainte (10) selon l'une des revendications précédentes, interagissant au travers de signaux électromagnétiques, ledit émetteur-récepteur (50) étant agencé pour analyser une réponse spectrale sélective du capteur de contrainte (10) aux signaux électromagnétiques incidents émis par ledit émetteur-récepteur (50).

## Patentansprüche

1. Spannungssensor (10) mit einer selektiven spektralen Antwort gegenüber einfallenden elektromagnetischen Signalen, umfassend:
- ein Trägersubstrat (1),
- einen ersten leitfähigen Abschnitt (2),
- einen zweiten leitfähigen Abschnitt, umfassend eine offene Schleife (3), welcher mit dem ersten leitfähigen Abschnitt gekoppelt ist,
wobei die offene Schleife ein erstes Ende (31) und ein zweites Ende (32) umfasst, welches gegenüber dem ersten Ende (31) angeordnet ist, wobei das erste Ende (31) und das zweite Ende (32) gemeinsam einen Kondensator mit einer elektrischen Kapazität von einem Wert definieren, welcher von der Position des ersten Endes (31) bezüglich des zweiten Endes (32) abhängt,
wobei, wenn eine vorbestimmte Kraft auf das Substrat entlang einer longitudinalen Richtung (X) eingewirkt wird, sich ein Strecken des Substrats entlang der longitudinalen Richtung (X) einstellt und sich eine Änderung der Position des ersten Endes (31) bezüglich des zweiten Endes (32) einstellt, welche die elektrische Kapazität ändert und welche die spektrale Antwort ändert,
**dadurch gekennzeichnet, dass** die offene Schleife wenigstens einen überstehenden Abschnitt (4) umfasst, welcher sich entlang der longitudinalen Richtung (X) erstreckt, welcher ein mit dem Substrat verbundenes Verankerungsende (41) aufweist, wobei ein nicht mit dem Substrat verbundener zentraler Abschnitt (43) und ein freies Ende (32) das zweite Ende (32) bilden.

2. Sensor nach Anspruch 1, wobei der erste Abschnitt (2) eine erste Resonanzfrequenz (F1) aufweist, und wobei der zweite Abschnitt eine zweite Resonanzfrequenz (F2) nahe der ersten Resonanzfrequenz (F1) aufweist.

3. Sensor nach einem der Ansprüche 1 bis 2, ferner umfassend eine Erdungsplatte (5), welche an der Seite des Substrats gegenüber der Seite angeordnet ist, welche den ersten und zweiten Abschnitt (2, 3) trägt.

4. Sensor nach einem der Ansprüche 1 bis 3, **dadurch gekennzeichnet, dass** er frei von einer lokalen elektrischen Versorgungsquelle ist.

5. Sensor nach einem der Ansprüche 1 bis 4, **dadurch gekennzeichnet, dass** er frei von diskreten elektronischen Komponenten ist.

6. Sensor nach einem der Ansprüche 1 bis 5, wobei das Substrat sich im Wesentlichen entlang einer Ebene XY erstreckt und wobei der überstehende Abschnitt (4) in einer Richtung senkrecht zu der Ebene XY bezüglich dem ersten Ende (31) verlagert ist.

7. Sensor nach einem der Ansprüche 1 bis 6, wobei wenigstens eines der Enden (31, 32) eine Zackenform aufweist.

8. Sensor nach einem der Ansprüche 1 bis 7, wobei die Länge (Lpaf) des überstehenden Abschnitts (4) etwa viermal größer ist als die Länge des Überlapps (Lc) bei Abwesenheit einer Belastung.

9. Sensor nach einem der Ansprüche 1 bis 8, wobei wobei das Material des Substrats (1) Kapton umfasst.

10. Sensor nach einem der Ansprüche 1 bis 9, wobei das Spektrum der verwendeten Frequenzen zwischen etwa 1 GHz und etwa 80 GHz liegt.

11. Sensor nach einem der Ansprüche 1 bis 10, ferner umfassend einen dritten leitfähigen Abschnitt, umfassend eine zweite offene Schleife (3'), welche mit dem ersten leitfähigen Abschnitt gekoppelt ist, wobei die zweite offene leitfähige Schleife Enden umfasst, welche einen Kondensator bilden, wobei die Enden dazu eingerichtet sind, das eine gegenüber dem anderen unter dem Einfluss einer Kraft verlagert zu werden, welche auf das Substrat entlang einer transversalen Richtung (Y) eingewirkt wird.

12. System zum Detektieren einer Kraft, umfassend einen Sendeempfänger (50) und einen Spannungssensor (10) nach einem der vorhergehenden Ansprüche, welche mittels elektromagnetischer Signale zusammenwirken, wobei der Sendeempfänger (50) dazu vorgesehen ist, eine selektive spektrale Antwort des Spannungssensors (10) auf einfallende elektromagnetische Signale zu detektieren, welche von dem Sendeempfänger (50) ausgestrahlt werden.

## Claims

1. Strain sensor (10) having a selective spectral response with respect to incident electromagnetic signals, comprising:
- a support substrate (1),
- a first conductive portion (2),
- a second conductive portion comprising an open loop (3) coupled to said first conductive portion,
said open loop comprising a first end (31) and a second end (32) arranged facing the first end (31),
in which the first end (31) and second end (32) together define a capacitor having an electrical capacitance of a value dependent on the position of the first end (31) in relation to the second end (32),
in which, when a predetermined force is applied to the substrate in a longitudinal direction (X), a stretching of the substrate occurs in the longitudinal direction (X) and the result thereof is a modification of the position of the first end (31) in relation to the second end (32) which modifies the electrical capacitance and which modifies the spectral response, **characterized in that** the open loop comprises at least one overhanging portion (4), extending in the longitudinal direction (X), which has an anchoring end (41) linked to the substrate, a central part (43) not linked to the substrate and a free end (32) forming the second end (32).

2. Sensor according to Claim 1, in which the first portion (2) exhibits a first resonant frequency (F1), and in which the second portion exhibits a second resonant frequency (F2), close to the first resonant frequency (F1).

3. Sensor according to one of Claims 1 and 2, further comprising a ground plane (5) situated on the face of the substrate opposite the face supporting the first and second portions (2, 3).

4. Sensor according to one of Claims 1 to 3, **characterized in that** it lacks any local electrical power source.

5. Sensor according to one of Claims 1 to 4, **characterized in that** it lacks any discrete electronic component.

6. Sensor according to one of Claims 1 to 5, in which the substrate extends substantially in a plane XY and in which the overhanging portion (4) is offset in a direction at right angles to said plane XY relative to the first end (31).

7. Sensor according to one of Claims 1 to 6, in which at least one of the ends (31, 32) has a pointed shape.

8. Sensor according to one of Claims 1 to 7, in which the length (Lpaf) of the overhanging portion (4) is greater than approximately four times the length of overlap (Lc) in the absence of load.

9. Sensor according to one of Claims 1 to 8, in which the material of the substrate (1) comprises kapton.

10. Sensor according to one of Claims 1 to 9, in which the range of the frequencies used lies between approximately 1 GHz and approximately 80 GHz.

11. Sensor according to one of Claims 1 to 10, further comprising a third conductive portion comprising a second open loop (3') coupled to said first conductive portion, said second open loop comprising ends forming a capacitor, said ends being adapted to be moved relative to one another under the effect of a force applied to the substrate in a transverse direction (Y).

12. Load detection system comprising a transceiver (50) and a strain sensor (10) according to one of the preceding claims, interacting through electromagnetic signals, said transceiver (50) being arranged to analyse a selective spectral response of the strain sensor (10) to the incident electromagnetic signals emitted by said transceiver (50).
